# FASCICULE DE BREVET EUROPEEN

(11) **EP 0 479 034 B1**
(45) Date de publication et mention de la délivrance du brevet: **07.02.1996**
(21) Numéro de dépôt: 91115765.9
(22) Date de dépôt: 17.09.1991
(51) Int. Cl.: G02B 6/255

(54) **Dispositif de positionnement d'une épissure de fibre optique dans un support**
Positioniervorrichtung von einem Faserspleiss in einem Halter
Positioning device of a fibre optical splice in a support

(30) Priorité: 20.09.1990 FR 9011619
(43) Date de publication de la demande: 08.04.1992
(73) Titulaire: ALCATEL CABLE, F-92111 Clichy Cédex (FR)
(72) Inventeur: Libert, Jean-François, F-62360 Pont de Briques St Etienne (FR); Blondin, Jean-François, F-62100 Coulogne (FR)
(74) Mandataire: Weinmiller, Jürgen

(56) Documents cités:
- EP-A- 0 175 107
- EP-A- 0 343 588
- US-A- 4 793 681

## Description

La présente invention est relative aux câbles optiques sous marins.

Elle porte en particulier sur un dispositif de positionnement d'une épissure de fibre optique, effectuée sur chacune des fibres optiques individuelles d'un câble, lors d'une réparation de liaison ou de câble endommagé, et alors montée dans un support.

Une épissure réalisée sur une fibre est de dimensions supérieures à la fibre. Elle est montée dans un logement d'un support, le support recevant également les épissures des autres fibres du câble dans d'autres logements individuels. Ce support assure le maintien des différentes épissures de fibre et permet la reconstitution à son niveau de la structure mécanique et fonctionnelle du câble. L'ensemble résultant est monté dans un boîtier étanche ou boite de jonction, pour sa protection.

De manière courante, le support est un support cylindrique à encoches longitudinales sur sa périphérie. Sur le support, les logements sont prévus de longueur et de largeur supérieures aux dimensions des épissures. Il est en effet difficile de les prévoir aux dimensions exactes des épissures, celles-ci étant souvent de dimensions légèrement différents entre elles. Il en résulte des possibilités de débattement longitudinal et transversal des épissures dans leur logement.

Ce débattement possible d'une épissure dans son logement est tout à fait préjudiciable à la qualité du raccordement réalisé.

Le document US-A-4793681 divulgue un support d'épissures ayant une série de rainures dans chacune desquelles l'une des épissures est bloquée par des moyens de rétention. Ces moyens de rétention sont deux lames ressort ou deux ressorts de compression bloquant entre eux l'épissure dans la rainure.

La présente invention a pour but d'assurer de manière simple, rapide et particulièrement efficace la tenue d'une épissure de fibre dans le logement de son support.

Elle a pour objet un dispositif de postionnement d'une épissure de fibre optique dans un support, comportant d'une part ledit support ayant un logement de dimensions supérieures à celles de ladite épissure et d'autre part des moyens de rétention de l'épissure dans ledit logement, caractérisé en ce que lesdits moyens de rétention sont constitués par un manchon déformable, formé de spires plates hélicoïdales, monté sur ladite épissure et bloqué avec l'épissure dans ledit logement, ledit manchon non déformé ayant une section intérieure inférieure à celle extérieure de l'épissure et le manchon déformé par l'épissure étant coincé dans le logement en enserrant l'épissure.

En particulier le manchon est plus long que l'épissure et celle-ci s'étend dans la partie centrale du manchon.

Dans des modes de réalisation possibles, le manchon est maintenu dans le logement, par coincement de sa partie centrale déformée dans la largeur du logement et/ou par un ruban extérieur de serrage de sa partie centrale déformée contre le fond du logement.

Avantageusement, l'épissure est renforcée initialement par une barquette métallique en U, dans laquelle elle est bloquée et éventuellement noyée.

Les caractéristiques et avantages de la présente invention ressortiront de la description donnée ci-après d'un exemple préféré de réalisation illustré dans les dessins ci-annexés. Dans ces dessins :
- La figure 1 est une vue schématique en perspective éclatée illustrant le dispositif de positionnement d'une épissure de fibre dans un support, selon la présente invention.
- La figure 2 est une vue schématique de dessus correspondant à la figure 1 et montrant l'épissure positionnée dans son support,
- La figure 3 est une vue schématique de côté de la figure 2,
- La figure 4 est une vue schématique de côté, donnée en variante par rapport à la figure 3.

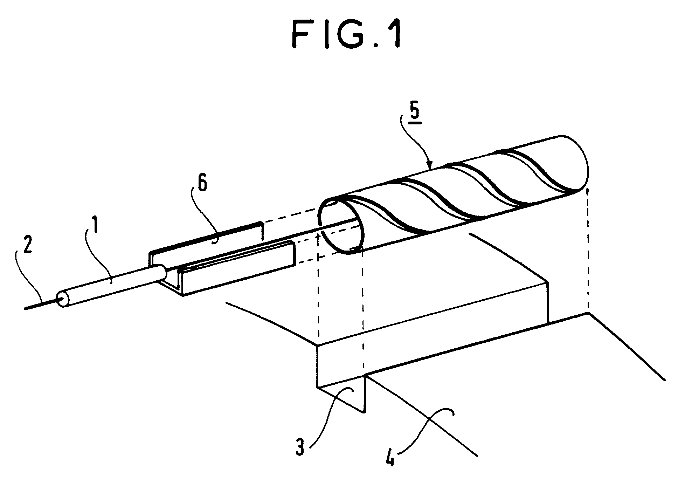

Dans la figure 1, on a illustré une épissure 1 réalisée sur une fibre optique 2 et présentant un encombrement plus important que la fibre elle-même. Cette épissure est à monter dans un logement 3 d'un support 4, ce support présentant d'autres logements individuels analogues pour les épissures des différentes fibres optiques d'un câble, qu'il doit recevoir. Le logement de chaque épissure est dans l'exemple illustré une encoche en long sur le support prévu cylindrique. La longueur et la largeur des encoches sont supérieures aux dimensions des différentes épissures.

Le dispositif de positionnement de l'épissure 1 dans son logement 3 comporte un manchon 5, formé de spires plates en hélice et déformable, recevant l'épissure et assurant son maintien dans le logement 3. En outre, l'épissure 1 est de préférence renforcée au départ, par une barquette de renforcement 6, dans laquelle elle est fermement bloquée avant son montage dans le manchon.

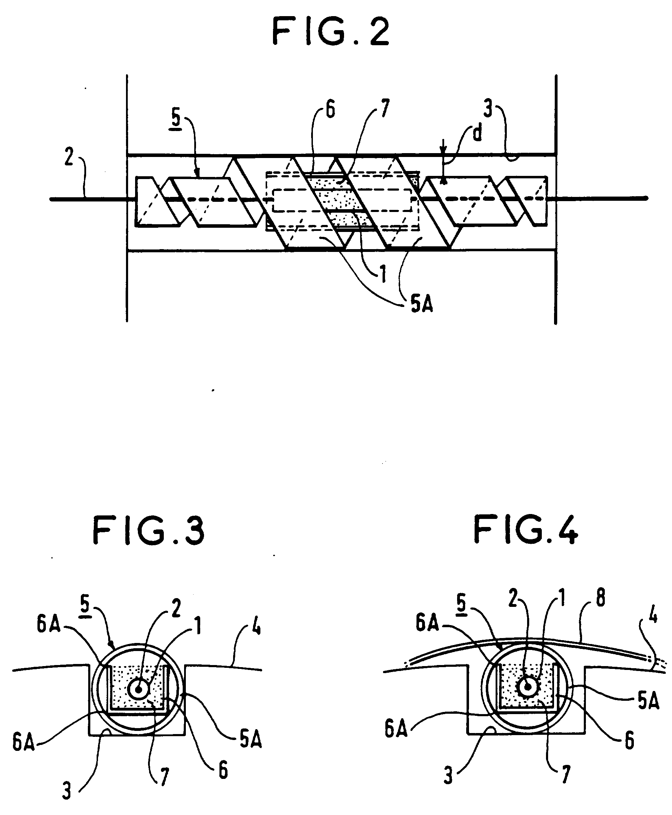

Cette barquette de renforcement 6 est en U et de préférence en acier. L'épissure y est logée et maintenue par collage ou autre, en étant noyée à l'intérieur du U de la barquette, dans la colle ou matériau de maintien 7 utilisé, comme schématisé dans les figures 3 et 4.

Le manchon 5 est initialement, avant réception de l'épissure ainsi renforcée, de dimensions intérieures transversales inférieures à celles extérieures de la barquette, prises en diagonale, ou celles de l'épissure renforcée résultante. Il est aussi initialement à spires plates quasi-jointives.

Ce manchon 5 est de préférence en matière plastique.

La figure 2 montre l'épissure 1, renforcée par la barquette 6, montée dans le manchon 5 lui-même logé dans l'encoche 3. Le manchon 5 est déformé par l'épissure renforcée intérieure, montée sensiblement dans sa zone centrale 5A.

La zone-centrale 5A s'est adaptée aux dimensions de l'épissure renforcée; elle s'est élargie en correspondance ainsi qu'indiqué par la différence de côte extérieure d par rapport à ses parties terminales. Ses spires se sont détendues et ne sont plus jointives. L'épissure renforcée y est directement maintenue de manière ferme par pincement de spires sur les arêtes 6A de la barquette ou épissure renforcée correspondante, comme visible dans les figures 3 et 4. Les spires terminales non déformées du manchon s'opposent à son déplacement d'un côté ou de l'autre dans le manchon.

Dans les figures 2 et 3, ce manchon 5 est utilisé pour assurer directement le positionnement sans jeu longitudinal ou transversal dans l'encoche de l'épissure qu'il contient déjà bloquée intérieurement, par coincement de sa zone déformée 5A dans la largeur de l'encoche 3.

Dans la figure 4, en variante, le manchon 5 est fixé dans l'encoche 3 par un ruban extérieur 8 de maintien. Ce ruban, du type lame métallique, ressort ou non, ou ruban plastique collant, enserre fermement le manchon contre le fond de l'encoche et s'oppose à son déplacement longitudinal et même transversal dans l'encoche. Il entoure, avec serrage le support cylindrique 4 pour le maintien simultané des différentes épissures dans leur logement individuel.

Ce support 4, avec les épissures ainsi montées, confère une bonne résistance mécanique au câble au niveau de sa réparation, sans jeu intérieur possible des épissures mais avec jeu possible des fibres de part et d'autre des épissures. Il est éventuellement associé à des moyens annexes supplémentaires de renforcement mécanique et est gainé pour la reconstitution de la structure du câble.

Ce support est monté de manière connue dans un bottier étanche à l'eau de mer dit botte de jonction, non représenté.

Bien entendu le manchon fixé dans l'encoche par coïncement de sa partie déformée dans la largeur de cette encoche, comme montré dans la figure 3, peut en outre être maintenu par un ruban extérieur supplémentaire comme montré dans la figure 4, pour garantir un maintien parfait.

Le manchon permet par ailleurs d'éviter tout contact direct de l'épissure avec le support (contact thermique, ainsi que vibration).

## Revendications

1. Dispositif de positionnement d'une épissure de fibre optique dans un support, comportant d'une part ledit support ayant un logement de dimensions supérieures à celles de ladite épissure et d'autre part des moyens de rétention de ladite épissure dans le logement, caractérisé en ce que lesdits moyens de rétention sont constitués par un manchon (5), déformable, formé de spires plates en hélice, recevant dans sa partie sensiblement centrale (5A) ladite épissure (1) et bloqué avec ladite épissure dans ledit logement (3), ledit manchon non déformé ayant une section intérieure inférieure à celle extérieure de ladite épissure et le manchon déformé par l'épissure étant bloqué par serrage dans ledit logement (3) en enserrant l'épissure.

2. Dispositif selon la revendication 1, caractérisé en ce que ledit manchon (5) non déformé est de dimensions transversales extérieures sensiblement inférieures à la largeur dudit logement (3) et est bloqué après déformation par l'épissure directement par coincement de sa partie centrale déformée (5A) dans la largeur du logement.

3. Dispositif selon l'une des revendications 1 et 2, caractérisé en ce que le manchon (5)) est plus long que ladite épissure, l'épissure étant montée dans une partie centrale (5A) dudit manchon.

4. Dispositif selon l'une des revendications 1 à 3, caractérisé en ce qu'il comporte un moyen extérieur (8) de serrage du manchon (5) contenant ladite épissure contre le fond dudit logement (3).

5. Dispositif selon l'une des revendications 1 à 4, caractérisé en ce que ledit manchon est en matière plastique.

6. Dispositif selon l'une des revendications 1 à 5, caractérisé en ce qu'il comporte des moyens de renforcement de ladite épissure (1), constitués par une barquette en U (6), dans laquelle l'épissure (1) est bloquée par un matériau de maintien et éventuellement noyée dans ce matériau de maintien (7), définissant ensemble une épissure renforcée ainsi montée dans ledit manchon (5).

7. Dispositif selon la revendication 6, caractérisé en ce que ladite barquette (6) est en acier.

## Patentansprüche

1. Vorrichtung zur Positionierung einer Spleißstelle einer Lichtleitfaser in einem Träger, die einerseits diesen Träger, der einen Raum mit größeren Abmessungen als die Spleißstelle und andererseits Mittel für den Halt dieser Spleißstelle in diesem Raum aufweist, dadurch gekennzeichnet, daß die Haltemittel von einer verformbaren Hülse (5) gebildet werden, die aus flachen Spiralwindungen besteht, welche in ihrem im wesentlichen zentralen Bereich (5A) die Spleißstelle (1) aufnimmt sowie mit der Spleißstelle im Raum (3) blockiert wird, wobei die nicht verformte Hülse einen Innendurchmesser hat, der kleiner ist als der Außendurchmesser der Spleißstelle, und die von der Spleißstelle verformte Hülse im Raum (3) eingeklemmt ist, indem sie die Spleißstelle umklammert.

2. Vorrichtung nach Anspruch 1, dadurch gekennzeichnet, daß die nicht verformte Hülse (5) äußere Querabmessungen hat, die wesentlich kleiner sind als die Breite des Raumes (3), und daß sie nach der Verformung durch die Spleißstelle direkt durch Verkeilen ihres verformten zentralen Bereichs (5A) in der Breite des Raumes blockiert wird.

3. Vorrichtung nach einem der Ansprüche 1 und 2, dadurch gekennzeichnet, daß die Hülse (5) länger ist als die Spleißstelle, wobei die Spleißstelle sich in einem zentralen Bereich (5A) der Hülse erstreckt.

4. Vorrichtung nach einem der Ansprüche 1 bis 3, dadurch gekennzeichnet, daß sie ein äußeres Mittel (8) aufweist, um die die Spleißstelle enthaltende Hülse (5) gegen den Boden des Raumes (3) zu drücken.

5. Vorrichtung nach einem der Ansprüche 1 bis 4, dadurch gekennzeichnet, daß die Hülse aus Kunststoffmaterial ist.

6. Vorrichtung nach einem der Ansprüche 1 bis 5, dadurch gekennzeichnet, daß sie Mittel zur Verstärkung der Spleißstelle (1) aufweist, die aus einem U-förmigen Schiffchen (6) bestehen, in dem die Spleißstelle (1) durch ein Haltematerial blockiert und eventuell in dieses Haltematerial (7) eingetaucht ist, die beide zusammen eine verstärkte Spleißstelle definieren, die dann in der Hülse (5) montiert ist.

7. Vorrichtung nach Anspruch 6, dadurch gekennzeichnet, daß das Schiffchen (6) aus Stahl ist.

## Claims

1. A device for positioning an optical fiber splice in a support, the device including firstly said support having a housing of dimensions greater than the dimensions of said splice, and secondly retaining means for retaining the splice in said housing, the device being characterized in that said retaining means are constituted by a deformable sleeve (5) formed by flat helical turns receiving said splice (1) substantially in its middle (5A) and secured with said splice in said housing (3), said non-deformable sleeve having an inside section less than the outside section of said splice and the sleeve deformed by the splice being clamped in said housing (3) holding the splice tightly in place.

2. A device according to claim 1, characterized in that said non-deformed sleeve (5) has outside transverse dimensions that are perceptibly less than the width of said housing (3) and is directly secured following deformation of the splice by its deformed central portion (5A) jamming in the width of the housing.

3. A device according to claim 1 or 2, characterized in that the sleeve (5) is longer than said splice, the splice being mounted in a central portion (5A) of said sleeve.

4. A device according to any one of claims 1 to 3, characterized in that it includes external means (8) for clamping the sleeve (5) containing said splice against the bottom of said housing (3).

5. A device according to any one of claims 1 to 4, characterized in that said sleeve is made of plastic.

6. A device according to any one of claims 1 to 5, characterized in that it includes means for reinforcing said splice (1), said means being constituted by a channel section trough (6) in which the splice (1) is secured by a holding material and is optionally embedded within the holding material (7), thereby together defining a reinforced splice which is mounted as such in said sleeve (5).

7. A device according to claim 6, characterized in that said trough (6) is made of steel.
